Europäisches Patentamt

European Patent Office

Office européen des brevets

(19)

(11) Numéro de publication: **0 278 814**
**B1**

(12) # FASCICULE DE BREVET EUROPEEN

(45) Date de publication du fascicule du brevet:
06.06.90

(51) Int. Cl.⁵: **F02C 9/38, F02C 9/28**

(21) Numéro de dépôt: 88400113.2

(22) Date de dépôt: 20.01.88

(54) Ensemble de régulation à dosage de carburant amélioré notamment pour turbomachines.

(30) Priorité: 28.01.87 FR 8700976

(43) Date de publication de la demande:
17.08.88 Bulletin 88/33

(45) Mention de la délivrance du brevet:
06.06.90 Bulletin 90/23

(84) Etats contractants désignés:
DE FR GB

(56) Documents cités:
EP-A- 0 107 940
FR-A- 1 134 891
FR-A- 2 495 692
FR-A- 2 528 495
US-A- 2 879 643

(73) Titulaire: SOCIETE NATIONALE D'ETUDE ET DE
CONSTRUCTION DE MOTEURS D'AVIATION,
"S.N.E.C.M.A.", 2, boulevard du Général Martial Valin,
F-75015 Paris(FR)

(72) Inventeur: Brocard, Jean Marie, 7, allée des Bégonias,
F-77950 Rubelle(FR)
Inventeur: Perrodeau, Eric, 5, rue de la Bièvre,
F-92340 Bourg La Reine(FR)
Inventeur: Vernochet, Maurice Georges, 22, rue Dajot,
F-77000 Melun(FR)

(74) Mandataire: Moinat, François et al, S.N.E.C.M.A. Service
des Brevets Boîte Postale 81, F-91003 Evry Cédex(FR)

ACTORUM AG

## Description

La présente invention concerne un ensemble de régulation à dosage de carburant amélioré notamment pour turbomachines.

On sait que les régulateurs de carburant pour turbomachines comprennent généralement un doseur de débit dont l'amont est relié à la sortie d'une pompe volumétrique et l'aval à un circuit d'injection, une soupape régulatrice placée en dérivation entre la pompe et le doseur, un détecteur de perte de charge destiné à fournir une sortie à pression modulée Pmod fonction de la perte de charge Pam-Pav où Pam et Pav sont les pressions mesurées en amont et en aval du doseur, la sortie Pmod agissant sur la soupape régulatrice pour l'ouvrir ou la fermer quand la perte de charge aux bornes du doseur varie afin de maintenir celle-ci constante, un limiteur de survitesse apte à prendre en compte la vitesse de rotation de la turbomachine pour laquelle un seuil de survitesse est fixé de façon à diminuer le débit d'injection dans l'installation utilisatrice lorsque ce seuil est dépassé afin d'éviter un emballement éventuel de la turbomachine, et enfin un clapet d'arrêt capable d'arrêter sur commande le débit du carburant injecté dans la turbomachine, les organes précités étant commandés au moyen d'un calculateur de régulation.

Il est courant dans ce genre de régulateurs de réaliser un ensemble de commande du combustible comprenant un doseur et une soupape de commande montée en série avec le doseur, la soupape étant actionnée par une pression pilote pour limiter le débit dans le cas où des paramètres de fonctionnement choisis du moteur dépassent des niveaux prédéterminés. Le brevet GB 1 465 480 montre un exemple de ce genre de dispositifs dans lequel la pression pilote est commandée par un moteur-couple qui est actionné par des signaux d'intensité de courant provenant d'un circuit de commande qui fonctionne en réponse aux conditions de fonctionnement précitées du moteur.

Il est également connu par le brevet FR 2 495 692 d'actionner électriquement par des moteurs-couple la soupape de commande selon deux niveaux d'excitation, l'un permettant à la soupape de garder une position moyenne autorisant un débit de sortie et l'autre lui faisant prendre une position dans laquelle l'orifice de sortie de la soupape est obturé et dont le débit de sortie est donc nul.

Dans d'autres dispositifs la coupure du carburant est assurée par des moyens différents de ceux permettant le réglage du carburant, pour des raisons de sécurité.

Ces dispositifs antérieurs répondent au but, considéré comme souhaitable, d'assurer que tous les aspects de la commande du moteur, y compris la mise en marche et l'arrêt, soient commandés par voie électrique.

Ces dispositifs nécessitent la présence de moteurs-couple de commande ainsi que d'une soupape intermédiaire commandant le clapet d'arrêt.

Or dans l'intérêt de la fiabilité de ce genre de régulation pour turbomachines, il est souhaitable que le nombre des composants de commande soit minimal.

La présente invention a pour but d'améliorer la fiabilité des dispositifs du genre connus sans en augmenter la complexité hydraulique.

Elle a pour autre but de permettre la mise en marche de la turbomachine directement au moyen du calculateur de régulation en agissant uniquement sur le doseur, ce dernier ayant, selon l'invention, des caractéristiques lui permettant de passer d'une position de débit nul à une position assurant le débit d'allumage.

L'invention a également pour but de ne permettre le retour du doseur à la position de débit nul que dans des conditions choisies et de préférence non dangereuses, au roulage sur aire de stationnement par exemple, par le positionnement d'une butée de sécurité antidévissage.

Ces buts sont atteints selon l'invention par le fait que le doseur est constitué par un double piston différentiel apte à obturer plus ou moins une tubulure d'entrée ou de sortie de carburant, ledit piston coulissant dans un fourreau entre deux butées, une première butée fixe étant mécanique et correspondant au débit maximal de sortie de carburant à pression Pav autorisé par le doseur et une seconde butée dite "de sécurité antidévissage" étant effaçable et constituant en position de butée un seuil de débit minimal de sortie de carburant, ledit seuil de débit minimal pouvant être franchi par l'action sur un circuit de commande capable d'effacer la seconde butée de telle sorte que le piston doseur puisse arriver à une position extrême de débit de sortie nul.

Selon une caractéristique additionnelle, le piston différentiel du doseur est solidaire d'un tiroir comportant une chambre annulaire capable de mettre en communication, lorsque le doseur est positionné en deçà du seuil de débit minimal, une tubulure d'amenée de carburant à la pression Pam avec une tubulure de sortie pour amener la pression Pam dans la tubulure de sortie. Cette tubulure de sortie amène adite pression Pam d'une part à un circuit de commande du clapet d'arrêt interposé entre le doseur et le circuit d'injection de la turbomachine afin de fermer ce clapet et d'autre part à une chambre du détecteur de perte de charge afin d'ouvrir la soupape régulatrice et dériver vers l'amont de la pompe haute pression volumétrique le flux de carburant à pression Pam arrivant en amont du doseur.

Selon une autre particularité de réalisation, la butée antidévissage est constituée par un second piston disposé dans le prolongement du doseur entre l'extrémité du fourreau et une cloison de séparation. Ledit piston sépare deux chambres de commande de la butée, l'une soumise à une pression réduite par un diaphragme en aval d'un électrorobinet alimenté en carburant à la pression Pam, l'autre soumise à la basse pression Pca et comportant un ressort antagoniste. En outre, la butée comporte une aiguille axiale solidaire du piston et traversant un alésage de la cloison de séparation pour servir de butée mobile au doseur.

D'autres caractéristiques de l'invention seront précisées dans le complément de description qui va suivre en regard des planches de dessins annexées sur lesquelles on a montré :

- à la figure 1, le schéma d'organisation d'une régulation de carburant dans laquelle s'intègrent les moyens de l'invention. Dans cette figure, les liaisons hydrauliques ont été représentées en traits pleins, les liaisons mécaniques en traits interrompus courts et les liaisons électriques en traits interrompus longs ;

- à la figure 2, un mode de réalisation du doseur selon l'invention, et ses moyens de commande ;

- à la figure 3, un mode de réalisation des moyens hydrauliques de la régulation schématisée à la figure 1 et dans laquelle s'intègre le doseur de la figure 2.

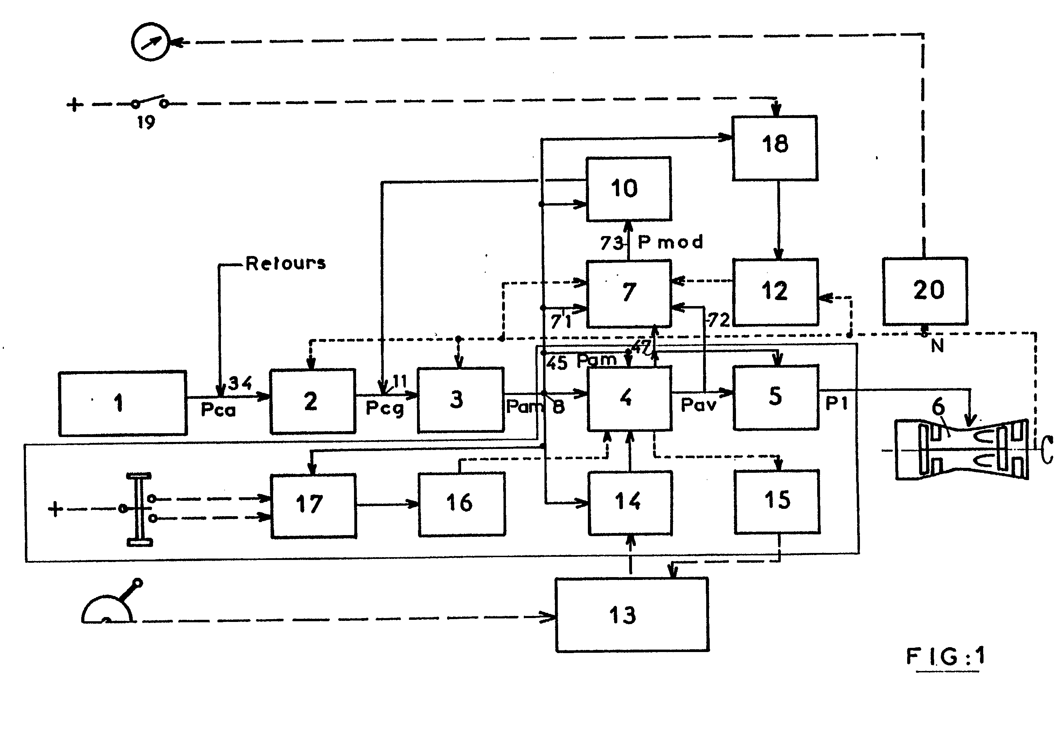

A la figure 1 est représenté le schéma d'organisation d'une régulation de carburant de turbomachine. L'installation comporte une pompe haute pression 3 alimentée en carburant depuis le réservoir 1 par une pompe basse pression 2. La pompe 3 est volumétrique et fournit un débit de carburant proportionnel au régime de la turbomachine à un doseur 4 qui, au travers d'un clapet 5, appelé par la suite clapet-d'arrêt, alimente le circuit d'injection principale de carburant d'une chambre de combustion d'une turbomachine 6.

Un détecteur de perte de charge 7 reçoit sur deux tubulures d'entrée 71 et 72 les informations des pressions Pam, prélevée en un point 8 situé entre la pompe HP 3 et le doseur 4, et Pav, en aval du doseur, et, sous l'action de carburant à la pression Pam prélevé au point 8, fournit sur sa tubulure de sortie 73 une pression Pmod qui commande l'ouverture ou la fermeture d'une soupape régulatrice 10 dont l'entrée est reliée au point 8 à pression Pam et dont la sortie est ramenée à un point 11 situé sur la tubulure reliant la pompe basse pression 2 et la pompe haute pression 3.

Le rôle de la soupape régulatrice 10 est, en réponse à la détection d'une variation de la perte de charge aux bornes du doseur égale à la différence Pam-Pav, de dériver l'excédent de débit de carburant qui se trouve entre la pompe HP 3 et le doseur 4 afin de maintenir constante la perte de charge dans le doseur, ce qui constitue une condition pour que le débit de carburant fourni aux injecteurs, lequel est proportionnel à la section de passage du doseur et à la racine carrée de la perte de charge, ne soit plus fonction que des déplacements du piston doseur.

Un limiteur de survitesse 12 recevant pour information d'entrée la vitesse de rotation N de la turbomachine qui l'entraine en rotation est appelé à diminuer le débit dans le circuit d'injection de la turbomachine 6 lorsqu'un seuil de survitesse est atteint afin de maintenir le système à une vitesse tolérable. Pour ce faire, le limiteur de survitesse comporte une douille disposée dans un alésage coaxial au tiroir du détecteur de perte de charge 7 qu'il entraine en rotation et sur lequel il est apte, lors du dépassement du seuil de survitesse, à agir dans la même direction que lors d'une détection d'une augmentation de la perte de charge par le détecteur 7 pour diminuer la pression Pmod en sortie dudit détecteur, ce qui a pour effet d'ouvrir rapidement la soupape régulatrice 10, et donc de réduire le débit dans l'installation réceptrice 6, empêchant ainsi le régime d'augmenter encore et évitant la destruction de la turbomachine.

Ainsi que cela sera explicité plus en détail dans la suite de la description, le doseur 4 constitué par un piston différentiel est commandé en translation par un calculateur de régulation 13 qui agit sur une (ou des) servo-valve(s) 14 permettant de modifier les pressions dans les chambres de commande dudit piston, tandis que la position du doseur est mesurée par un (ou des) capteur(s) de déplacement 15 qui transmet(tent) l'information de position au calculateur 13.

Le déplacement du doseur vers sa position de débit minimal est limité, ainsi qu'on va le voir plus bas, par une butée de sécurité antidévissage 16, qui peut être effacée par action sur un électrorobinet 17 pour permettre au doseur 4 de prendre une position de fermeture ou de débit de sortie nul, position dans laquelle une chambre annulaire du doseur permet d'amener au clapet-d'arrêt une pression de commande Pam prélevée au point 8, de commander ainsi la fermeture dudit clapet-d'arrêt 5 et d'interrompre le circuit d'injection.

Pour compléter la description de la figure 1, il convient encore d'ajouter la présence en 18 d'un électrorobinet actionnable par un interrupteur 19 et permettant d'amener la pression Pam sur une chambre du limiteur de survitesse 12 afin de pouvoir effectuer au sol un test de déplacement dudit limiteur et du détecteur de perte de charge et vérifier ainsi que ces deux organes peuvent agir normalement. Toutefois cette fonction de test n'entre pas expressément dans le cadre de la présente invention pas plus que la présence d'un capteur de régime 20 permettant de transmettre l'information de régime moteur à la cabine de pilotage.

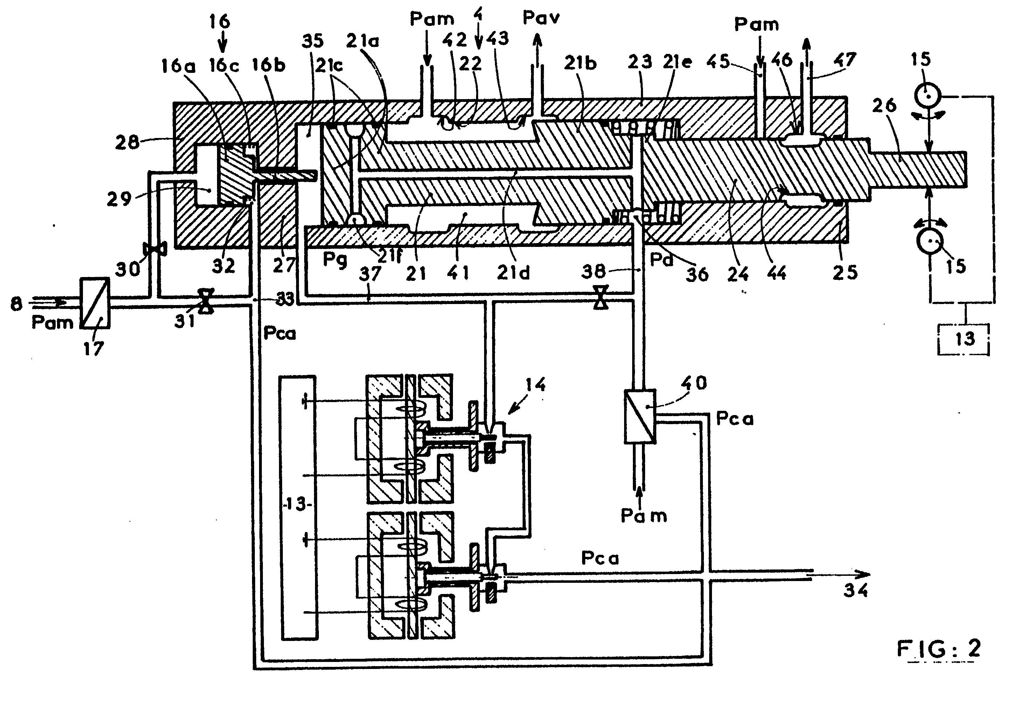

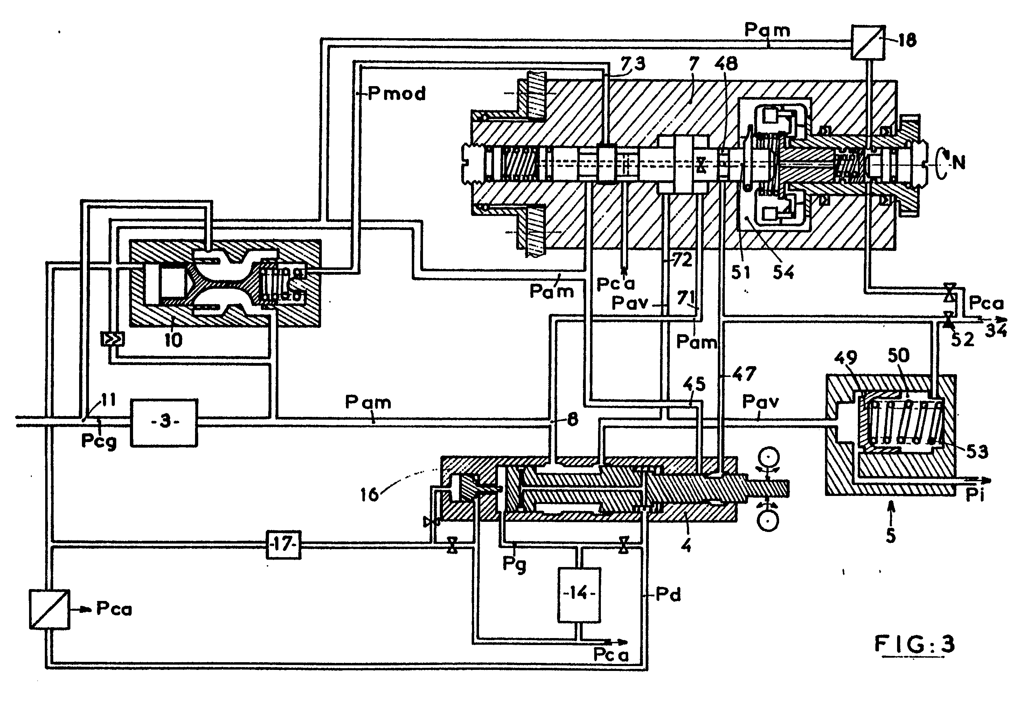

Cette description synoptique étant effectuée, on se reportera aux figures 2 et 3 pour la suite de la description dans laquelle les éléments identiques sont représentés par les mêmes repères chiffrés.

Le doseur 4 est constitué par un double piston différentiel 21 composé de deux pistons 21a et 21b solidaires et de même diamètre, disposé dans l'alésage 22 d'un fourreau 23. Un tiroir cylindrique 24 disposé dans un alésage coaxial et de diamètre inférieur du fourreau 23 est solidaire de ce double piston 21 du coté du piston 21b et traverse avec étanchéité l'extrémité 25 du fourreau 23 (à droite sur la figure 2). Un capteur de déplacement 15 (ou deux capteurs formant une chaîne de mesure redondante) dont l'information est transmise au calculateur 13 est lié à l'extrémité 26 du tiroir 24 (à droite sur la figure 2).

Le déplacement du doseur 21 vers la droite, donc vers la position de débit maximal, est limité par une butée mécanique 21e. A l'autre extrémité du fourreau, le déplacement du doseur 21 est limité à sa position de débit minimal par la butée antidévissage 16. Celle-ci, disposée à l'extrémité 28 du fourreau 23 (opposée à l'extrémité 25 et à gauche sur la figure 2) est constituée par un piston 16a disposé entre l'extrémité 28 et une cloison intermédiaire 27. Une aiguille 16b traversant la cloison 27 est solidaire du piston 16a et son extrémité libre forme la butée proprement dite pour le doseur 21.

L'extrémité 28 du fourreau et le piston 16a forment une chambre 29 alimentée en carburant au travers d'un premier diaphragme ralentisseur 30, par l'electrorobinet 17 bistable, lui-même recevant la haute pression Pam depuis le point 8. La chambre 32 formée entre le piston 16a et la cloison 27 contient un ressort antagoniste 16c et est reliée par une tubulure 33 à la basse pression Pca en un point 34 situé entre le réservoir 1 et la pompe de gavage 2. Un diaphragme ralentisseur 31 disposé entre la tubulure 33 et l'aval de l'électrorobinet 17 permet, lors de la fermeture de ce dernier, de décharger la pression de la chambre 29 vers le point 34.

Entre la cloison 27 et le piston 21a du doseur et respectivement entre le piston 21b du doseur et l'extrémité 25 du fourreau sont formées deux chambres d'extrémité, respectivement 35 et 36, alimentées par deux tubulures 37 et 38 recevant du carburant depuis le point 8 du circuit haute pression au travers d'un détendeur 40 en aval duquel la pression détendue Pd alimente la chambre 36 de petite section tandis que cette pression Pd est modulée au travers d'un diaphragme et de la servo-valve de commande 14 régulée par le calculateur 13 pour donner dans la chambre 35 la pression Pg qui agit sur le côté gauche du piston 21a à l'encontre de la pression Pd et d'un ressort antagoniste situé dans la chambre 36.

La chambre 41 du doseur formée entre les pistons 21a et 21b est en relation avec deux chambrages annulaires 42 et 43 du fourreau 23, le premier recevant le carburant à pression Pam tandis que le deuxième permet, par les mouvements relatifs du piston 21b masquant plus ou moins le chambrage 43, de délivrer au clapet-d'arrêt 5 le carburant dosé à pression Pav. Les fuites de carburant entre les chambres 41 et 35, pouvant perturber la commande du doseur, sont évitées grâce à deux joints toriques 21c associés à une rainure circulaire 21f disposée entre ces deux joints et mise en relation avec la chambre 36 par des canaux radiaux et un alésage interne 21d pour parer le cas de rupture de l'un des deux joints 21c.

Lorsque l'électrorobinet 17 est ouvert, la pression dans la chambre 29 est telle que le piston 16a est en appui vers la droite dans une position où l'aiguille 16b constitue la butée antidévissage du tiroir doseur.

Dans cette position de la butée, le piston 21b est empêché de masquer complètement le chambrage de sortie 43. Le débit ne peut donc pas atteindre des valeurs inférieures à une valeur préfixée.

Lorsque l'électrorobinet 17 est fermé, la butée 16 est effacée vers la gauche, elle permet au doseur 21 de se déplacer totalement vers la gauche et le piston 21b peut masquer complètement le chambrage 43. Dans cette position extrême gauche du doseur, une chambre annulaire 44 du tiroir 24 met en communication une tubulure 45 d'amenée de carburant à la pression Pam , prélevé au point 8, avec un chambrage 46 du fourreau et une tubulure de sortie 47, qui conduit la haute pression Pam :

- d'une part à une chambre 48 du détecteur de perte de charge afin de modifier l'équilibre de celui-ci dans le sens de la diminution de la pression Pmod qui ouvrira la soupape régulatrice 10 et dérivera vers l'amont de la pompe HP 3, le flux de carburant délivré en amont du doseur 4 fermé. Pour ce faire, la chambre 48 du détecteur de perte de charge est en communication par un alésage interne 51 du tiroir de détecteur de perte de charge avec une chambre d'extrémité 54 dudit détecteur pour soumettre ladite chambre à la pression Pam et déplacer le détecteur de perte de charge vers la gauche, c'est-à-dire dans le même sens que lors d'une augmentation de la perte de charge du doseur, pour commander le déplacement de la soupape régulatrice vers l'ouverture. En l'absence de la commande d'arrêt, les chambres 48 et 54 du détecteur de perte de charge sont soumises à la basse pression Pca (34) au travers d'un diaphragme 52.

- d'autre part à la chambre de commande 50 du clapet d'arrêt 5. Celui-ci comprend un piston 49 soumis en fonctionnement normal (c'est-à-dire lorsque le doseur est en position de débit de carburant vers les injecteurs) sur un côté à la pression Pav du carburant qu'il délivre à la turbomachine 6, et sur son autre côté à la basse pression Pca et à la poussée d'un ressort antagoniste 53 disposé dans la chambre de commande 50.

Lors de la commande d'arrêt du débit, la chambre 50 est mise à la pression Pam. Le piston 49 du clapet vient en appui sur son siège et interrompt hermétiquement le débit de carburant vers le système d'injection.

La butée de sécurité antidévissage dans la régulation selon l'invention peut être mise en place ou effacée à tout moment du vol. Son role est d'éviter une course accidentelle du piston doseur vers les débits faibles. Elle est particulièrement utile en approche à basse altitude.

Elle est également très utile en vol où, en cas de panne, elle offre un délai de réflexion avant commutation sur l'autre chaîne électronique de commande du doseur, car elle empêche le doseur de se fermer jusqu'à un débit trop faible, ce qui évite un "trou de poussée" désagréable, voire une extinction du moteur et permet un rétablissement rapide du débit normal.

Elle a également pour avantage de permettre que la mise en marche de la turbomachine puisse être réalisée par le calculateur de régulation et que son arrêt nécessite la concordance d'un premier ordre venant du calculateur (donc de la manette des gaz) et d'un deuxième ordre tout ou rien venant de la commande délibérée de la butée.

**Revendications**

1. - Ensemble de régulation notamment pour turbomachines, comprenant un doseur de débit (4) dont l'entrée est reliée au côté refoulement d'une pompe haute pression (3) volumétrique délivrant du carburant à une pression Pam et dont la sortie débite le carburant à une pression Pav vers un circuit d'injection (6) ; un détecteur de perte de charge (7) apte à détecter les variations des pressions Pam et Pav et à délivrer du carburant à une pression Pmod, fonction de la perte de charge Pam-Pav, vers une soupape régulatrice (10) apte à réagir sur le débit du carburant pour maintenir constante cette perte de charge ; un limiteur de survitesse (12) apte à détecter la vitesse de rotation de la turbomachine qui l'entraîne et à diminuer le débit de carburant délivré au circuit d'injection (6) en réponse à un dépassement d'un seuil de vitesse prédéterminé ; un clapet d'arrêt (5) interposé entre le doseur (4) et le circuit d'injection (6), les organes précités étant commandés au moyen d'un calculateur de régulation (13), caractérisé en ce que le doseur est constitué par un double piston (21a, 21b) différentiel, apte à obturer plus ou moins une tubulure d'entrée (42) ou de sortie (43) de carburant, ledit piston coulissant dans un fourreau (23) entre deux butées, une première butée fixe (21e) étant mécanique et correspondant au débit maximal de sortie de carburant à pression Pav autorisé par le doseur et une seconde butée dite "de sécurité antidévissage" (16) étant effaçable et constituant en position active de butée un seuil de débit minimal de sortie de carburant, ledit seuil de débit minimal pouvant être franchi par l'action sur un circuit de commande (17,30,31) capable d'effacer la seconde butée (16) de telle sorte que le piston-doseur (21) puisse arriver à une position extrême de débit de sortie nul.

2. - Ensemble de régulation selon la revendication 1, caractérisé en ce que le piston différentiel (21) du doseur est solidaire d'un tiroir (24) comportant une chambre annulaire (44) capable de mettre en communication, lorsque le doseur est positionné en deçà du seuil de débit minimal, une tubulure d'amenée de carburant (45) à la pression Pam avec une tubulure de sortie (47) pour amener la pression Pam dans la tubulure de sortie, ladite tubulure de sortie (47) amenant ladite pression Pam d'une part à un circuit de commande du clapet-d'arrêt (5) afin de fermer celui-ci et d'autre part à une chambre (48) du détecteur de perte de charge (7) afin d'ouvrir la soupape régulatrice (10) et dériver vers l'amont de la pompe haute pression volumétrique (3) le flux de carburant à pression Pam arrivant en amont du doseur (4).

3. - Ensemble de régulation selon l'une des revendications 1 ou 2, caractérisé en ce que le déplacement du piston doseur (21) est commandé par au moins une servo-valve (14) de commande permettant de moduler les pressions de deux chambres d'extrémité (35,36) situées entre les deux extrémités respectives du fourreau (23) et du piston doseur (21).

4. - Ensemble de régulation selon l'une quelconque des revendications 1 à 3 caractérisé en ce que la butée antidévissage (16) est constituée par un second piston (16a) disposé dans le prolongement du doseur (21) entre l'extrémité (28) du fourreau (23) et une cloison de séparation (27), ledit piston (16a) séparant deux chambres de commande (29,32) de la butée, l'une (29) soumise à une pression réduite par un diaphragme (30) en aval d'un électrorobinet (17) alimenté en carburant à la pression Pam, l'autre (32) soumise à la basse pression Pca et comportant un ressort antagoniste (16c) ; et en ce que la butée (16) comporte une aiguille axiale (16b) solidaire du piston (16a) et traversant un alésage de la cloison de séparation (27) pour servir de butée mobile au doseur.

5. - Ensemble de régulation selon l'une quelconque des revendications 2 à 4, caractérisé en ce que le clapet-d'arrêt (5) comprend un piston (49) soumis sur un côté à du carburant à pression Pav, qu'il délivre à pression Pi au système d'injection (6) et sur son autre côté à la basse pression Pca et à un ressort antagoniste (53), disposé dans une chambre (50), et en ce que ladite chambre (50) est reliée au circuit de commande à pression Pam lors de la commande en débit nul du doseur (4) pour amener le piston (49) du clapet (5) sur son siège et interrompre hermétiquement le débit de carburant vers le système d'injection.

6. - Ensemble de régulation selon l'une quelconque des revendications 2 à 5, caractérisé en ce que la chambre (48) du détecteur de perte de charge (7) est en communication par un alésage interne (51) du tiroir de détecteur de perte de charge avec une chambre d'extrémité (54) dudit détecteur pour, lors de la commande d'arrêt du débit, soumettre ladite chambre (54) à la pression Pam et déplacer le détecteur de perte de charge dans le même sens que lors d'une augmentation de perte de charge pour commander l'ouverture de la soupape régulatrice (10).

7. - Ensemble de régulation selon la revendication 6 caractérisé en ce que la chambre (48) du détecteur de perte de charge (7) est reliée à la basse pression Pca (34) au travers d'un diaphragme (52) pour être soumise à ladite basse pression en l'absence de la commande d'arrêt par mise en position de débit nul du doseur de carburant (4).

8. - Ensemble de régulation selon l'une quelconque des revendications 1 à 7 caractérisé en ce que le piston (21a) du doseur (21) comporte entre deux joints toriques (21c) une rainure circulaire (21f) en communication par des canaux radiaux et un alésage central (21d) avec la deuxième chambre d'extrémité (36).

**Patentansprüche**

1. Regeleinheit, insbesondere für Turbomaschinen, mit einem Durchsatzdosierer (4), dessen Eingang mit der Förderseite einer volumetrischen Hochdruckpumpe (3) verbunden ist, die Kraftstoff mit einem Druck Pam liefert, und dessen Ausgang den Kraftstoff mit einem Druck Pav an einen Einspritzkreis (6) liefert, mit einem Druckverlustdetektor (7), der die Änderungen der Drücke Pam und Pav erfaßt und Kraftstoff mit einem von dem Druckverlust Pam–Pav funktionell abhängigen Druck Pmod an ein auf den Kraftstoffdurchsatz reagierendes Regelventil (10) liefert, um diesen Druckverlust konstant zu halten, mit einem Drehzahlbegrenzer (12) zur Erfassung der Drehgeschwindigkeit der ihn antreibenden Turbomaschine und zur Verringerung des an den Einspritzkreis gelieferten Kraftstoffdurchflusses in Abhängigkeit vom Überschreiten eines vorbestimmten Drehzahlschwellwerts, sowie mit einem zwischen dem Dosierer (4) und dem Einspritzkreis (6) angeordneten Sperrventil (5), wobei die vorgenannten Organe durch einen Steuerrechner (13) gesteuert werden, dadurch gekennzeichnet, daß der Dosierer (4) aus einem Doppel-Differentialkolben (21a, 21b) besteht, der eine Eintritts- oder Austrittsleitung (42 bzw. 43) für den Kraftstoff mehr oder weniger verschließen kann und in einer Hülse (23) zwischen zwei Anschlägen gleitet, nämlich einem ersten festen mechanischen Anschlag (21e), der dem maximalen von dem Dosierer ermöglichten Austrittsdurchsatz von Kraftstoff mit dem Druck Pav entspricht, und einem zweiten, eine Sicherung gegen unbeabsichtigte Unterbrechung des Kraftstoffdurchflusses bildenden, rückstellbaren Anschlag (16), der in seiner aktiven Anschlagposition eine Schwelle für einen Mindest-Ausgangsdurchsatz von Kraftstoff bestimmt, wobei diese Schwelle minimalen Durchsatzes aufhebbar ist durch Einwirken auf einen Steuerkreis (17, 30, 31), der ein Rückstellen des zweiten Anschlags ermöglicht, so daß der Dosier-Kolben (21) in eine dem Ausgangsdurchsatz Null entsprechende Extremstellung gelangen kann.

2. Regeleinheit nach Anspruch 1, dadurch gekennzeichnet, daß der Differentialkolben (21) des Dosierers fest mit einem Schieber (24) verbunden ist, der eine ringförmige Kammer (44) besitzt, die dann, wenn der Dosierer sich jenseits der genannten Schwelle minimalen Durchflusses befindet, einen Rohrstutzen (45) zur Zuführung von Kraftstoff mit dem Druck Pam mit einem Ausgangstutzen (47) verbindet, um den Druck Pam in den Auslaßstutzen zu übertragen, wobei der Ausgangsstutzen (47) diesen Druck Pam einerseits in einen Steuerkreis für das Sperrventil (5) überträgt, um dieses zu schließen, und andererseits in eine Kammer (48) des Druckverlustdetektors (7), um das Regelventil zu öffnen und die stromaufwärts des Dosierers (4) ankommende Kraftstoffströmung mit dem Druck Pam auf die stromabwärtige Seite der volumetrischen Hochdruckpumpe (3) abzuleiten.

3. Regeleinheit nach einem der Ansprüche 1 oder 2, dadurch gekennzeichnet, daß die Verschiebung des Dosier-Kolbens (21) durch wenigstens ein Servosteuerventil (14) gesteuert wird, das eine Modulation der Drücke in zwei endseitigen Kammern (35, 36) des Dosierers ermöglicht, die zwischen den beiden jeweiligen Endbereichen der Hülse (23) und des Kolben-Dosierers (21) liegen.

4. Regeleinheit nach einem Ansprüche 1 bis 3, dadurch gekennzeichnet, daß der Sicherheits-Anschlag (16) von einem zweiten Kolben (16a) gebildet ist, der in Verlängerung des Dosierers (21) zwischen dem Endbereich (28) der Hülse (23) und einer Trennwand (27) angeordnet ist und zwei Steuerkammer (29, 32) des Anschlags voneinander trennt, von denen die eine (29) einem Druck ausgesetzt ist, der durch ein Drosselorgan (30) reduziert ist, das stromabwärts eines mit Kraftstoff mit dem Druck Pam gespeisten Elektroventils (17) angeordnet ist, während die andere Steuerkammer (32) dem niedrigen Druck (Pac) ausgesetzt ist und eine Gegenfeder (16c) enthält, und daß der Anschlag (16a) eine mit dem Kolben (16a) fest verbundene xiale Nadel (16b) aufweist, die durch eine Bohrung der Trennwand (27) dringt und den beweglichen Anschlag des Dosierers bildet.

5. Regeleinheit nach einem Ansprüche 2 bis 4, dadurch gekennzeichnet, daß das Sperrventil (5) einen Kolben (49) besitzt, auf dessen eine Seite Kraftstoff mit dem Druck Pav einwirkt, den es mit dem Druck Pi an den Einspritzkreis (6) liefert, während äuf die andere Seite der niedrige Druck Pca und eine Gegenfeder (53) einwirkt, die in einer Kammer (50) angeordnet ist, und daß diese Kammer (50) mit dem Steuerkreis mit dem Druck Pam verbunden ist, wenn der Dosierer (4) auf den Durchfluß Null gesteuert ist, um den Kolben (49) des Ventils (5) auf seinen Sitz zu führen und den Kraftstoffdurchfluß zu dem Einspritzkreis hermetisch zu unterbrechen.

6. Regeleinheit nach einem der Ansprüche 2 bis 5, dadurch gekennzeichnet, daß die Kammer (48) des Druckverlustdetektors (7) über eine innere Bohrung (51) des Schiebers des Druckverlustdetektors mit einer endseitigen Kammer (54) des Druckverlustdetektors in Verbindung steht, um diese Kammer (54) bei einer Sperrsteuerung dem Druck Pam auszusetzen und den Druckverlustdetektor in derselben Richtung zu verschieben wie bei einer Vergrößerung des Druckverlusts und dadurch das Regelventil (10) zu öffnen.

7. Regeleinheit nach einem der Ansprüche 6, dadurch gekennzeichnet, daß die Kammer (48) des Druckverlustdetektors (7) über ein Drosselorgan (52) mit dem niedrigen Druck Pca (34) in Verbindung steht und diesem niedrigen Druck ausgesetzt wird, wenn nicht durch Positionierung des Dosierers auf den Durchfluß Null eine Sperrsteuerung erfolgt.

8. Regeleinheit nach einem der Ansprüche 1 bis 7, dadurch gekennzeichnet, daß der Kolben (21a) des Dosierers (21) eine zwischen zwei Ringdichtungen (21c) liegende Ringnut (21f) aufweist, die über radiale Kanäle und eine zentrale Bohrung (21d) mit der zweiten endseitigen Kammer (36) verbunden ist.

**Claims**

1. A fuel control assembly, notably for gas turbine engines, comprising a flowmeter (4) whose inlet is connected to the return flow side of a high pressure direct acting pump (3) delivering fuel at a pressure Pam and whose outlet delivers the fuel at a pressure Pav to an injection circuit (6), a pressure drop sensor (7) capable of detecting variations in the pressures Pam and Pav and of delivering fuel at a pressure Pmod, as function of the pressure drop Pam–Pav, to a regulating valve (10) able to act on the flow of fuel to maintain the pressure drop constant, an overspeed limiter (12) capable of detecting the speed of rotation of the gas turbine that drives it and of reducing the flow of fuel to the injection circuit (6) in response to a predetermined speed threshold being exceeded; a stopvalve (5) placed between the flowmeter (4) and the injection circuit (6), the afore-mentioned elements being controlled by means of a controlling computer (13), characterised in that the flowmeter is constituted by a double differential piston (21a, 21b) capable of closing off to a greater or lesser extent either a fuel inlet pipe (42) or a fuel outlet pipe (43), the said piston sliding in a sleeve (23) between two stops, a first fixed stop (21e) being mechanical and corresponding to the maximum output of fuel at a pressure Pav permitted by the flowmeter and a second stop called a "safety and unscrewable stop" (16) being able to be cancelled and constituting in its active "stop" position a threshold of minimum fuel flow, the said minimum flow threshold being capable of being crossed by an action within the control circuit (17, 30, 31) able to override the second stop (16) so that the metering piston (21) can take up the extreme position of zero fuel flow.

2. A fuel control assembly in accordance with Claim 1, characterised in that the differential piston (21) of the flowmeter forms a single component with the slider (24) comprising an annular chamber (44) capable, when the flowmeter is on the near side of the minimum flow threshold, of putting the fuel supply pipe (45) at the pressure Pam in communication with the outlet pipe (47) to bring the pressure Pam in the outlet pipe, the said outlet pipe (47) [sic] taking the said pressure Pam on the one hand to the control circuit of the stopvalve (5) so as to close this and, on the other hand, to a chamber (48) in the pressure drop sensor (7) in order to open the regulating valve (10) and to divert upstream of the direct acting high pressure pump (3) the flow of fuel at the pressure Pam arriving upstream of the flowmeter.

3. A fuel control assembly in accordance with one or other of Claims 1 or 2, characterised in that the movement of the flowmeter piston (21) is controlled by at least one servovalve (14), enabling the pressures to be modulated in two end chambers (35, 36) situated between the two ends respectively of the sleeve (23) and of the flowmeter (21).

4. A fuel control assembly in accordance with one of the Claims 1 to 3, characterised in that the unscrewable stop (16) is constituted by a second piston (16a) placed in an extension of the flowmeter (21) between the end (28) of the sleeve (23) and a dividing wall (27), the said piston (16a) separating two control chambers (29, 32) in the stop, one (29) subjected to a reduced pressure via a diaphragm valve (30) downstream of a solenoid operated cock (17) supplied with fuel at the pressure Pam, the other, (32), subjected to a low pressure Pca and comprising an opposing spring (16c); and in that the stop (16) comprises an axial needle (16b) fixed to the piston and passing through a hole bored in the dividing wall (27) to act as a movable stop for the flowmeter.

5. A fuel control assembly in accordance with any one of Claims 2 to 4, characterised in that the stopvalve (5) includes a piston (49) subjected on one side to fuel at the pressure Pav, which it delivers at the pressure Pi to the injection system (6) and on its other side to the low pressure Pca and to an opposing spring (53) placed in a chamber (50), and in that the said chamber (50) is connected to the control circuit at a pressure Pam when the order for zero flow is given to the flowmeter (4) to bring the piston (49) of the stopvalve (5) onto its seat and to hermetically cut off the flow of fuel to the injection system.

6. A fuel control assembly in accordance with any of the Claims 2 to 5, characterised in that the chamber (48) of the pressure drop sensor (7) communicates through an inner hole (51) in the slider of the pressure drop sensor with an end chamber (54) in the said sensor so that, when the order to cut off the flow is given, the said chamber (54) is subjected to the pressure Pam and causes the pressure drop sensor to move in the same direction as in the case of an increase in the pressure drop, to order the opening of the regulating valve (10).

7. A fuel control assembly in accordance with Claim 6 characterised in that the chamber (48) in the pressure drop sensor (7) is connected at the low pressure Pca (34) through a diaphragm valve (52) so as to be subjected to the said low pressure in the absence of a command to stop by the fuel flowmeter (4) moving to a position of zero output.

8. A fuel control assembly in accordance with any one of Claims 1 to 7, characterised in that the piston (21a) of the flowmeter (21) comprises between two O rings (21c) a circular groove (21f) in communication via radial channels and a central bore (21d) with the second end chamber (36).

FIG:1

EP 0 278 814 B1

FIG: 2

Pam
Pmod
Pam
Pca
Pav
Pam
Pam
Pg
Pd
Pca
Pca
Pi
Pav
Pcg
Pca

73 7 48
72 51 54
52 34
49 50
53
45 47
8 16 4 5
11 -3- -17- -14- 18 10

N

EP 0 278 814 B1

FIG:3